# EUROPEAN PATENT APPLICATION

(11) **EP 2 843 990 A1**
(43) Date of publication of application: **04.03.2015**
(21) Application number: 12876871.0
(22) Date of filing: 31.07.2012
(51) Int. Cl.: H04W 28/08

(54) **ACCESS CONTROL METHOD, TERMINAL, AND ACCESS NETWORK DEVICE**

(30) Priority: 15.05.2012 WO PCT/CN2012/075518
(71) Applicant: Huawei Technologies Co., Ltd, Shenzhen, Guangdong 518129 (CN)
(72) Inventor: GENG, Tingting, Shenzhen Guangdong 518129 (CN); ZHENG, Xiaoxiao, Shenzhen Guangdong 518129 (CN)
(74) Representative: Thun, Clemens
(86) International application number: PCT/CN2012/079423
(87) International publication number: WO 2013/170537

(57) **Abstract**

The present application provides an access control method, a terminal, and an access network device. The access control method includes: receiving, by a terminal from an access network device, a message that is used to reject or release a service originated or performed by the terminal, where the message includes domain wait time information or service type wait time information, where the domain wait time information is used to indicate a wait time specific to a domain of the service, or the service type wait time information is used to indicate a wait time specific to a service type of the service; and refraining, by the terminal, from originating the service in a time indicated by the domain wait time information or the service type wait time information.

## Description

### TECHNICAL FIELD

The present application relates to communications technologies, and in particular, to an access control method, a terminal, and an access network device.

### BACKGROUND

With development of communications technologies, a terminal can implement various services, and correspondingly, terminals are increasing in type and number. Due to limited capabilities of network devices, plenty of terminals access a network arbitrarily, and the centralized access of the terminals makes the network device overloaded or even leads to breakdown of a network device and a network system. In the prior art, an access network device can solve such problems by using an access class (Access Class, AC) to control (that is, bar or allow) terminal access.

However, the access control of the access network device is specific to the AC, and therefore, when access control needs to be performed, the access network device can control only the terminal access corresponding to the specified AC, which reduces flexibility of the access control.

### SUMMARY

Multiple aspects of the present application provide an access control method, a terminal, and an access network device to improve flexibility of access control.

One aspect of the present application provides an access control method, including:
receiving, by a terminal from an access network device, a message that is used to reject or release a service originated or performed by the terminal, where the message includes domain wait time information or service type wait time information, where the domain wait time information is used to indicate a wait time specific to a domain of the service, or the service type wait time information is used to indicate a wait time specific to a service type of the service; and
refraining, by the terminal, from originating the service in a time indicated by the domain wait time information or the service type wait time information.

Another aspect of the present application provides an access control method, including:
obtaining, by a terminal, a domain access barring parameter or a service type access barring parameter, where the domain access barring parameter includes a CS domain access barring parameter and/or a PS domain access barring parameter, or the service type access barring parameter includes a conversation service access barring parameter and/or a streaming service access barring parameter and/or an interactive service access barring parameter and/or a background service access barring parameter;
generating, by the terminal, a random number; and
accessing or refraining from accessing, by the terminal, a network of the domain or a network of the service type according to the random number and the domain access barring parameter, or according to the random number and the service type access barring parameter.

Another aspect of the present application provides an access control method, including:
determining, by an access network device, a need of rejecting or releasing a service originated or performed by a terminal; and
sending, by the access network device to the terminal, a message that is used to reject or release the service originated or performed by the terminal, where the message includes domain wait time information or service type wait time information, so that the terminal refrains from originating the service in a time indicated by the domain wait time information or the service type wait time information, where the domain wait time information is used to indicate a wait time specific to a domain of the service, or the service type wait time information is used to indicate a wait time specific to a service type of the service.

Another aspect of the present application provides an access control method, including:
generating, by an access network device, a domain access barring parameter or a service type access barring parameter, where the domain access barring parameter includes a CS domain access barring parameter and/or a PS domain access barring parameter, or the service type access barring parameter includes a conversation service access barring parameter and/or a streaming service access barring parameter and/or an interactive service access barring parameter and/or a background service access barring parameter; and
sending, by the access network device, the domain access barring parameter or the service type access barring parameter to a terminal, so that the terminal generates a random number and the terminal accesses or refrains from accessing a network of the domain or a network of the service type according to the random number and the domain access barring parameter or according to the random number and the service type access barring parameter.

Another aspect of the present application provides a terminal, including:
a receiver, configured to receive from an access network device a message that is used to reject or release a service originated or performed by the terminal, where the message includes domain wait time information or service type wait time information, where the domain wait time information is used to indicate a wait time specific to a domain of the service, or the service type wait time information is used to indicate a wait time specific to a service type of the service; and
a processor, configured to refrain from originating the service in a time indicated by the domain wait time information or the service type wait time information.

Another aspect of the present application provides a terminal, including:
a receiver, configured to obtain a domain access barring parameter or a service type access barring parameter, where the domain access barring parameter includes a CS domain access barring parameter and/or a PS domain access barring parameter, or the service type access barring parameter includes a conversation service access barring parameter and/or a streaming service access barring parameter and/or an interactive service access barring parameter and/or a background service access barring parameter;
a generation processor, configured to generate a random number; and
an access processor, configured to access or refrain from accessing a network of the domain or a network of the service type according to the random number and the domain access barring parameter, or according to the random number and the service type access barring parameter.

Another aspect of the present application provides an access network device, including:
a determination processor, configured to determine a need of rejecting or releasing a service originated or performed by a terminal; and
a sender, configured to send, to the terminal, a message that is used to reject or release the service originated or performed by the terminal, where the message includes domain wait time information or service type wait time information, so that the terminal refrains from originating the service in a time indicated by the domain wait time information or the service type wait time information, where the domain wait time information is used to indicate a wait time specific to a domain of the service, or the service type wait time information is used to indicate a wait time specific to a service type of the service.

Another aspect of the present application provides an access network device, including:
a generation processor, configured to generate a domain access barring parameter or a service type access barring parameter, where the domain access barring parameter includes a CS domain access barring parameter and/or a PS domain access barring parameter, or the service type access barring parameter includes a conversation service access barring parameter and/or a streaming service access barring parameter and/or an interactive service access barring parameter and/or a background service access barring parameter; and
a sender, configured to send the domain access barring parameter or the service type access barring parameter to a terminal, so that the terminal generates a random number and the terminal accesses or refrains from accessing a network of the domain or a network of the service type according to the random number and the domain access barring parameter or according to the random number and the service type access barring parameter.

As can be seen from the above technical solutions, the above solutions solve the problem that the access network device can control only the terminal access corresponding to a specified AC in the access control in the prior art, and improve flexibility of the access control.

### BRIEF DESCRIPTION OF DRAWINGS

To describe the technical solutions in the embodiments of the present application or in the prior art more clearly, the following briefly introduces the accompanying drawings required for describing the embodiments or the prior art. Apparently, the accompanying drawings in the following description show merely some embodiments of the present application, and persons of ordinary skill in the art may still derive other drawings from these accompanying drawings without creative efforts.
FIG. 1 is a schematic flowchart of an access control method according to an embodiment of the present application;
FIG. 2 is a schematic flowchart of an access control method according to another embodiment of the present application;
FIG. 3 is a schematic flowchart of an access control method according to another embodiment of the present application;
FIG. 4 is a schematic flowchart of an access control method according to another embodiment of the present application;
FIG. 5 is a schematic structural diagram of a terminal according to another embodiment of the present application;
FIG. 6 is a schematic structural diagram of a terminal according to another embodiment of the present application;
FIG. 7 is a schematic structural diagram of an access network device according to another embodiment of the present application; and
FIG. 8 is a schematic structural diagram of an access network device according to another embodiment of the present application.

### DESCRIPTION OF EMBODIMENTS

To make the objectives, technical solutions, and advantages of embodiments of the present application more comprehensible, the following clearly and completely describes the technical solutions in the embodiments of the present application with reference to the accompanying drawings in the embodiments of the present application. Apparently, the described embodiments are merely a part rather than all of the embodiments of the present application. All other embodiments obtained by persons of ordinary skill in the art based on the embodiments of the present application without creative efforts shall fall within the protection scope of the present application.

The technical solutions of the embodiments of the present application are applicable to a variety of radio access networks, for example, an evolved universal mobile telecommunications system (Universal Mobile Telecommunication System, UMTS) terrestrial radio access network (Evolved Universal Mobile Telecommunication System Territorial Radio Access Network, E-UTRAN), a UMTS terrestrial radio access network (UMTS Territorial Radio Access Network, UTRAN), a global system for mobile communications (Global System for Mobile Communications, GSM)/enhanced data rate for gsm evolution (Enhanced Data rate for GSM Evolution, EDGE) radio access network (GSM EDGE Radio Access Network, GERAN), and so on.

The access network device may be an evolved NodeB (Evolved NodeB, eNB) or a home evolved NodeB (Home Evolved NodeB, HeNB) in the E-UTRAN, or may be a radio network controller (Radio Network Controller, RNC) in the UTRAN, or may be an access network device controller (Base Station Controller, BSC) in the GERAN.

In addition, the term "and/or" in this document is merely an association relationship for describing associated objects, and represents three possible relationships. For example, "A and/or B" may represent the following three cases: A exists alone, both A and B exist, and B exists alone. In addition, the symbol "/" in this document generally represents that associated objects before and after the symbol are in an "or" relationship.

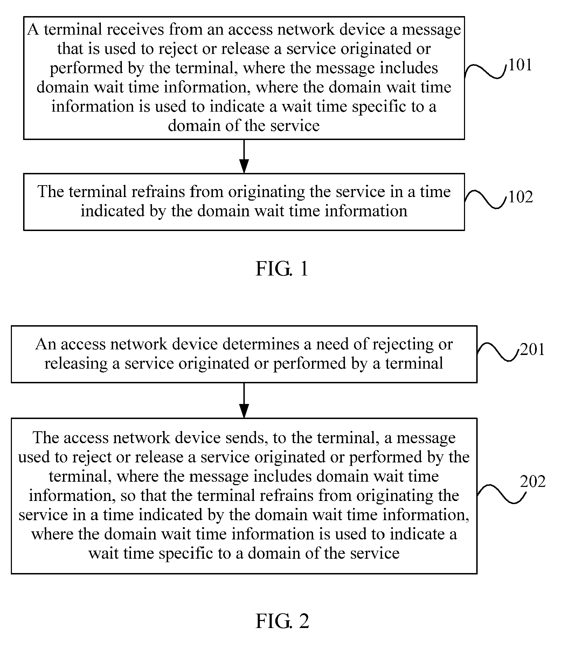

FIG. 1 is a schematic flowchart of an access control method according to an embodiment of the present application. As shown in FIG. 1:
101. A terminal receives from an access network device a message that is used to reject or release a service originated or performed by the terminal, where the message includes domain wait time information, where the domain wait time information is used to indicate a wait time specific to a domain of the service.

The domain wait time information may include, but not limited to, circuit switching (Circuit Switching, CS) domain wait time information and/or packet switching (Packet Switching, PS) domain wait time information.
102. The terminal refrains from originating the service in a time indicated by the domain wait time information.

Optionally, in an optional implementation manner of this embodiment, in 101, an information element (Information Element, IE) in the message may carry the domain wait time information, where the message may be a message in the prior art, for example, an RRC connection reject (RRC Connection Reject) message, a cell update confirm (Cell Update Confirm) message, an RRC connection release (RRC Connection Release) message, or a signaling connection release (Signalling Connection Release) message; or may be a new message different from the message in the prior art, which is not limited in this embodiment.

For example, in the RRC connection reject (RRC Connection Reject) message or the RRC connection release (RRC Connection Release) message, a new IE is added to carry the CS domain wait time (CS wait time) information and/or the PS domain wait time (PS wait time) information. The value range of the CS domain wait time (CS wait time) or the PS domain wait time (PS wait time) may be, but not limited to, {0s, 4s, 8s, 16s, 32s, 64s, 128s, 256s, 512s}.

For still another example, in the signaling connection release message, a new IE is added to carry the PS domain wait time (PS wait time) information. The value range of the PS domain wait time (PS wait time) may be, but not limited to, {0s, 4s, 8s, 16s, 32s, 64s, 128s, 256s, 512s}.

Optionally, the terminal originates an RRC connection request (RRC Connection Request) message or a cell update (Cell Update) message. If network resources are not enough at this time, the access network device may set a corresponding "CS wait time"/"PS wait time" by using a terminal-specific domain type (that is, a CS domain service or a PS domain service) in an RRC connection reject (RRC Connection Reject) message or a cell update confirm (Cell Update Confirm) message, so as to reject the service originated by the terminal and indicate that the terminal is barred from originating the rejected service in the time indicated by the "CS wait time"/"PS wait time". The "CS wait time" is intended for CS domain services, and its value is a time segment, indicating that the terminal is barred from originating the rejected CS domain service in the time indicated by the "CS wait time"; and the "PS wait time" is intended for PS domain services, and its value is a time segment, indicating that the terminal is barred from originating the rejected PS domain service in the time indicated by the "PS wait time".

Optionally, when the terminal performs a normal service, if the network resources are not enough at this time, the access network device may set a corresponding "CS wait time"/"PS wait time" by using a terminal-specific domain type (that is, a CS domain service or a PS domain service) in an RRC connection release (RRC Connection Release) message or a signaling connection release (Signalling Connection Release) message, so as to reject the service performed by the terminal and indicate that the terminal is barred from originating the rejected service in the time indicated by the "CS wait time"/"PS wait time". The "CS wait time" is intended for CS domain services, and its value is a time segment, indicating that the terminal is barred from performing the rejected CS domain service in the time indicated by the "CS wait time"; and the "PS wait time" is intended for PS domain services, and its value is a time segment, indicating that the terminal is barred from originating the rejected PS domain service in the time indicated by the "PS wait time".

Understandably, the domain wait time is only an example, and a service type wait time may apply instead, for example, a conversation (Conversational) service wait time and/or a streaming (Streaming) service wait time and/or an interactive (Interactive) service wait time and/or a background (Background) service wait time; or an additional wait time (additional wait time) regardless of the domain or the service type, which is not limited in this embodiment.

Optionally, in an optional implementation manner of this embodiment, if the domain wait time information is a PS domain wait time, in 102, when the terminal receives the message for a preset number of times, the terminal may refrain from originating the service in a first preset time, where the first preset time is greater than the time indicated by the domain wait time information.

For example, specifically, the terminal may add a counter and a timer on a non access stratum (Non Access Stratum, NAS) of the terminal. When the terminal receives the PS domain wait time information for the first time, a terminal access stratum (Access Stratum, AS) notifies the terminal NAS, and the NAS starts the counter and the timer. Every time when the PS domain wait time information is received before the timer expires, the counter increases by 1 until the counter is full. When the counter is full, the terminal is suspended for a time segment (that is, the first preset time), and then originates the service. When the terminal originates the service, the counter is zeroed out and the timer is restarted, so that the counter and the timer enter the next cycle of working states. If the counter is still not full when the timer expires, the counter is zeroed out and the timer is restarted, so that the counter and the timer enter the next cycle of working states. The time segment may be set to be the sum of time indicated by the received PS domain wait time information, or multiples of the time indicated by the PS domain wait time information received a time or several times, or a random value, which is not limited in this embodiment.

For still another example, specifically, the terminal may add a counter on the NAS of the terminal. When the terminal receives the PS domain wait time information for the first time, a terminal access stratum (Access Stratum, AS) notifies the terminal NAS, and the NAS starts the counter. Every time when the PS domain wait time information is received, the counter increases by 1 until the counter is full. When the counter is full, the terminal is suspended for a time segment (that is, the first preset time), and then originates the service. When the terminal originates the service, the counter is zeroed out, so that the counter enters the next cycle of working states. If the terminal originates the service successfully, the counter is zeroed out, so that the counter enters the next cycle of working states. The time segment may be set to be the sum of time indicated by the received PS domain wait time information, or multiples of the time indicated by the PS domain wait time information received a time or several times, or a random value, which is not limited in this embodiment.

Optionally, in an optional implementation manner of this embodiment, if the domain wait time information is a PS domain wait time, in 102, the terminal refrains from originating the service in a second preset time, where the second preset time is greater than the time indicated by the domain wait time information.

For example, specifically, the terminal may add a timer on the NAS of the terminal. When the terminal receives the PS domain wait time information for the first time, a terminal access stratum (Access Stratum, AS) notifies the terminal NAS, and the NAS starts the timer. When the timer expires, the terminal originates the service again. The duration of the timer may be set to be the sum of time indicated by the received PS domain wait time information, or multiples of the time indicated by the PS domain wait time information received a time or several times, or a random value, which is not limited in this embodiment.

Optionally, in an optional implementation manner of this embodiment, if the domain wait time information is a PS domain wait time, in 102, the terminal generates a random number; and according to the random number and a preset access barring parameter that may be specifically preset by the terminal on the terminal NAS, the terminal originates the service or refrains from originating the service when the time indicated by the domain wait time information expires.

For example, if the random number is less than the access barring parameter, the terminal originates the service when the time indicated by the domain wait time information expires; and if the random number is greater than or equal to the access barring parameter, refrains from originating the service when the time indicated by the domain wait time information expires.

For still another example, if the random number is greater than or equal to the access barring parameter, the terminal originates the service when the time indicated by the domain wait time information expires; and if the random number is less than the access barring parameter, refrains from originating the service when the time indicated by the domain wait time information expires.

Optionally, in an optional implementation manner of this embodiment, if the domain wait time information is PS domain wait time, in 102, the terminal generates a random access class. For example, specifically, the terminal may generate a random access class on the terminal NAS, and if the random access class is the same as an access class of the terminal, the terminal originates the service when the time indicated by the domain wait time information expires, or if the random access class is different from the access class of the terminal, refrains from originating the service when the time indicated by the domain wait time information expires.

Understandably, the PS domain wait time is only an example, and a CS domain wait time or a service type wait time may apply instead, for example, a conversation (Conversational) service wait time and/or a streaming (Streaming) service wait time and/or an interactive (Interactive) service wait time and/or a background (Background) service wait time; or an additional wait time (additional wait time) regardless of the domain or the service type, which is not limited in this embodiment.

It should be noted that, if the newly added IE that carries the "CS wait time"/"PS wait time", or the "Conversational wait time"/"Streaming wait time"/"Interactive wait time"/"Background wait time", or the "additional wait time", is set in parallel with the IE that carries the "wait time" in the prior art, then the IE that carries the "wait time" in the prior art needs to be set to 0 or another null field.

In this embodiment, a terminal receives from an access network device a message that is used to reject or release a service originated or performed by the terminal, where the message includes domain wait time information, where the domain wait time information is used to indicate a wait time specific to a domain of the service, so that the terminal refrains from originating the service in a time indicated by the domain wait time information. By using the wait time specific to the domain of the service that is indicated by the domain wait time information, domain-related access control is exercised for the service originated or performed by the terminal, which solves the problem in the prior art that the access network device can control only the terminal access corresponding to a specified AC in the access control, thereby improving flexibility of the access control.

Understandably, the domain wait time is only an example, and a service type wait time may apply instead, for example, a conversation (Conversational) service wait time and/or a streaming (Streaming) service wait time and/or an interactive (Interactive) service wait time and/or a background (Background) service wait time; or an additional wait time (additional wait time) regardless of the domain or the service type, which is not limited in this embodiment.

FIG. 2 is a schematic flowchart of an access control method according to another embodiment of the present application. As shown in FIG. 2:
201. An access network device determines a need of rejecting or releasing a service originated or performed by a terminal.

The service may include, but not limited to, a circuit switching (Circuit Switching, CS) domain service and/or a packet switching (Packet Switching, PS) domain service.
202. The access network device sends, to the terminal, a message used to reject or release a service originated or performed by the terminal, where the message includes domain wait time information, so that the terminal refrains from originating the service in a time indicated by the domain wait time information, where the domain wait time information is used to indicate a wait time specific to a domain of the service.

The domain wait time information may include, but not limited to, circuit switching (Circuit Switching, CS) domain wait time information and/or packet switching (Packet Switching, PS) domain wait time information.

Optionally, in an optional implementation manner of this embodiment, in 202, an information element (Information Element, IE) in the message may carry the domain wait time information, where the message may be a message in the prior art, for example, an RRC connection reject (RRC Connection Reject) message, a cell update confirm (Cell Update Confirm) message, an RRC connection release (RRC Connection Release) message, or a signaling connection release (Signalling Connection Release) message; or may be a new message different from the message in the prior art, which is not limited in this embodiment.

For example, in the RRC connection reject (RRC Connection Reject) message or the RRC connection release (RRC Connection Release) message, a new IE is added to carry the CS domain wait time (CS wait time) information and/or the PS domain wait time (PS wait time) information. The value range of the CS domain wait time (CS wait time) or the PS domain wait time (PS wait time) may be, but not limited to, {0s, 4s, 8s, 16s, 32s, 64s, 128s, 256s, 512s}.

For still another example, in the signaling connection release message, a new IE is added to carry the PS domain wait time (PS wait time) information. The value range of the PS domain wait time (PS wait time) may be, but not limited to, {0s, 4s, 8s, 16s, 32s, 64s, 128s, 256s, 512s}.

Optionally, the access network device receives an RRC connection request (RRC Connection Request) message or a cell update (Cell Update) message originated by the terminal. If network resources are not enough at this time, the access network device may set a corresponding "CS wait time"/"PS wait time" by using a terminal-specific domain type (that is, a CS domain service or a PS domain service) in an RRC connection reject (RRC Connection Reject) message or a cell update confirm (Cell Update Confirm) message, so as to reject the service originated by the terminal and indicate that the terminal is barred from originating the rejected service in the time indicated by the "CS wait time"/"PS wait time". The "CS wait time" is intended for CS domain services, and its value is a time segment, indicating that the terminal is barred from originating the rejected CS domain service in the time indicated by the "CS wait time"; and the "PS wait time" is intended for PS domain services, and its value is a time segment, indicating that the terminal is barred from originating the rejected PS domain service in the time indicated by the "PS wait time".

Optionally, when the terminal performs a normal service, if the network resources are not enough at this time, the access network device may set a corresponding "CS wait time"/"PS wait time" by using a terminal-specific domain type (that is, a CS domain service or a PS domain service) in an RRC connection release (RRC Connection Release) message or a signaling connection release (Signalling Connection Release) message, so as to reject the service performed by the terminal and indicate that the terminal is barred from originating the rejected service in the time indicated by the "CS wait time"/"PS wait time". The "CS wait time" is intended for CS domain services, and its value is a time segment, indicating that the terminal is barred from performing the rejected CS domain service in the time indicated by the "CS wait time"; and the "PS wait time" is intended for PS domain services, and its value is a time segment, indicating that the terminal is barred from originating the rejected PS domain service in the time indicated by the "PS wait time".

In this embodiment, an access network device determines a need of rejecting or releasing a service originated by a terminal, and therefore, the access network device sends, to the terminal, a message used to reject or release a service originated or performed by the terminal, where the message includes domain wait time information, so that the terminal refrains from originating the service in a time indicated by the domain wait time information, where the domain wait time information is used to indicate a wait time specific to a domain of the service. By using the wait time specific to the domain of the service that is indicated by the domain wait time information, domain-related access control is exercised for the service originated or performed by the terminal, which solves the problem in the prior art that the access network device can control only the terminal access corresponding to a specified AC in the access control, thereby improving flexibility of the access control.

Understandably, the domain wait time is only an example, and a service type wait time may apply instead, for example, a conversation (Conversational) service wait time and/or a streaming (Streaming) service wait time and/or an interactive (Interactive) service wait time and/or a background (Background) service wait time; or an additional wait time (additional wait time) regardless of the domain or the service type, which is not limited in this embodiment.

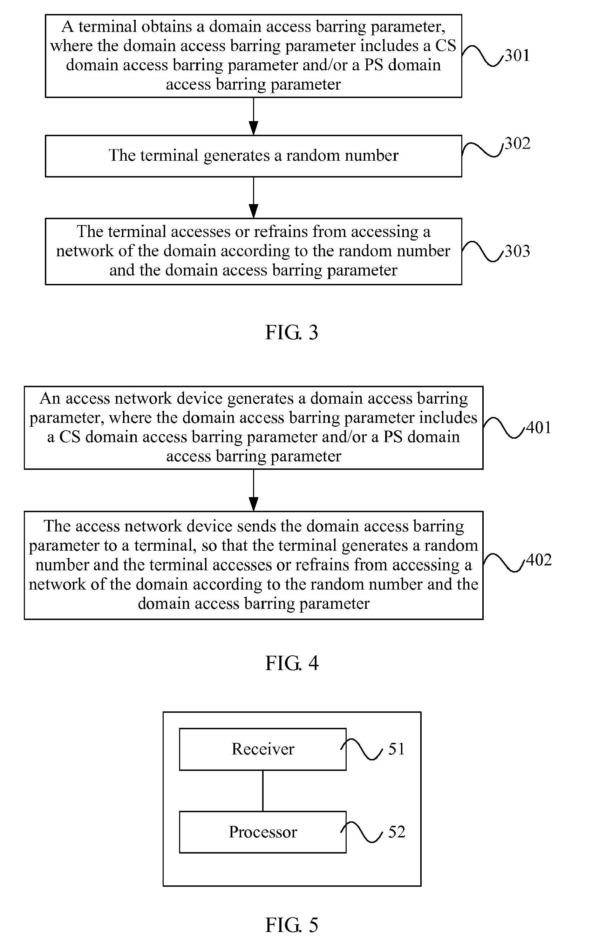

FIG. 3 is a schematic flowchart of an access control method according to another embodiment of the present application. As shown in FIG. 3:
301. A terminal obtains a domain access barring parameter, where the domain access barring parameter includes a CS domain access barring parameter (ACB Factor for CS Domain Specific Access Restriction, ACB Factor for CS DSAR) and/or a PS domain access barring parameter (ACB Factor for PS Domain Specific Access Restriction, ACB Factor for PS DSAR).
302. The terminal generates a random number.
303. The terminal accesses or refrains from accessing a network of the domain according to the random number and the domain access barring parameter.

Optionally, in an optional implementation manner of this embodiment, in 303, if the random number is less than the domain access barring parameter, the terminal accesses the network of the domain; and if the random number is greater than or equal to the domain access barring parameter, the terminal refrains from accessing the network of the domain.

Optionally, in an optional implementation manner of this embodiment, in 303, if the random number is greater than or equal to the domain access barring parameter, the terminal accesses the network of the domain; if the random number is less than the domain access barring parameter, the terminal refrains from accessing the network of the domain.

Optionally, in an optional implementation manner of this embodiment, in 301, the terminal receives access class barring information sent by an access network device, and obtains the domain access barring parameter corresponding to the access class barring information according to the access class barring information.

For example, if the corresponding domain access barring information is barring information for access classes 0 to 9, and, if an access class is set to not barred "not barred", the weight is 0.1; if an access class is set to barred "barred", the weight is 0.

For still another example, if an access class is set to "barred", the weight is 0.1; if an access class is set to "not barred", the weight is 0.

The domain access barring parameter that is corresponding to the access class barring information and obtained by the terminal is 0.1 *N, where N is a total value of the weight 0.1.

For example, access class barring (Access Class Barring, ACB) information such as access class barring information of paging response service access control (Paging Permission with Access Control), domain access service access control (Domain Specific Access Restriction), or cell access control (Cell Access Restriction), is included in a system information block (System Information Block, SIB) 3 or a SIB 4 of a system broadcast message received by the terminal.

If the terminal supports a paging response service, and if no access barring is applied to the paging response service, it is considered that the terminal access is not limited; if the access barring is applied to the paging response service, in the case of location area update or registration area update, the terminal determines, according to class barring information in a location area/registration area access class barring information list (Location/Registration Access Class Barred List), whether it is allowed to originate location area update or registration area update; or, if the terminal sends an access request due to a paging response or for other reasons, the terminal determines, according to access barring class information of the domain access service of the corresponding domain, whether it is allowed to send the access request; if the access barring class information of the domain access service of the corresponding domain does not exist, the terminal determines, according to the access class barring information of the cell access control, whether it is allowed to send the access request.

If the terminal does not support the paging response service but supports a domain access service, and if no access barring is applied to the domain access service, it is considered that the terminal access is not limited; if the access barring is applied to the domain access service, the terminal directly determines, according to the access barring class information of the domain access service of the corresponding domain, whether it is allowed to send an access request; if the access barring class information of the domain access service of the corresponding domain does not exist, the terminal determines, according to the access barring class information of the cell access control, whether it is allowed to send an access request.

If the terminal supports neither the paging response service nor the domain access service but supports only the access class information of the cell access control, and if the cell access control imposes no barring, it is considered that the terminal access is not limited; if the cell access control imposes barring, the terminal directly determines, according to the access class information of the cell access control, whether it is allowed to send an access request.

For detailed description, reference may be made to the relevant content in the prior art, and no repeated description is given here any further.

Optionally, in an optional implementation manner of this embodiment, in 301, the terminal receives the domain access barring parameter sent by the access network device. The value range of the domain access barring parameter may be, but not limited to, {0.00, 0.05, 0.10, 0.15, 0.20, 0.25, 0.30, 0.35, 0.40, 0.45, 0.50, 0.55, 0.60, 0.65, 0.70, 0.75, 0.80, 0.85, 0.90, 0.95}.

Optionally, in an optional implementation manner of this embodiment, in 301, the terminal may specifically receive a system broadcast message, a paging message, or a dedicated message sent by the access network device, where the system broadcast message, the paging message, or the dedicated message includes the domain access barring parameter.

For example, the terminal receives a system broadcast message, a paging message, or a dedicated message, and the domain access barring parameter (Barring Factor for Domain Specific Access Restriction) is included in the SIB 7 or another SIB of the system broadcast message, or in the paging message, or in the dedicated message.

Specifically, the domain access barring parameters of paging response service access control (Paging Permission with Access Control) and domain access service access control (Domain Specific Access Restriction) are carried in the SIB 7 or another SIB of the system broadcast message, or in the paging message, or in the dedicated message. If barring is applied to the paging response service, in the case of location area update or registration area update, the terminal determines, according to barring factor information in the location area/registration area access barring parameter, whether it is allowed to originate location area update or registration area update; or, if the terminal sends an access request due to a paging response or for other reasons, the terminal selects the access barring parameter of the corresponding domain access service according to the domain type of the access request, and determines whether it is allowed to send the access request.

Specifically, ACB time (ACB Timer) information may be further carried in the SIB 7 or another SIB of the system broadcast message, or in the paging message, or in the dedicated message, where the ACB time information is used to indicate a validity time of the domain access barring parameter. Understandably, the validity time of the domain access barring parameter may be indicated by the ACB time information. If the ACB time information is not configured, the existing timer may still be applied, that is, the domain access barring parameter is updated as soon as a new system broadcast message, or a new paging message, or a new dedicated message is received. The value range of the validity time of the domain access barring parameter may be, but not limited to, {0s, 4s, 8s, 16s, 32s, 64s, 128s, 256s, 512s}.

Specifically, parameter validity region information may be further carried in the SIB 7 or another SIB of the system broadcast message, or in the paging message, or in the dedicated message, where the parameter validity region information is used to indicate a validity region of the domain access barring parameter.

Understandably, the validity region of the domain access barring parameter may be indicated by the parameter validity region information. If the parameter validity region is configured, in the configured validity region, the UE still determines, according to the received access barring parameter, whether access is allowed, and updates the parameter when receiving a new domain access barring parameter in the paging message or the dedicated message.

If the parameter validity region information is not configured, the domain access barring parameter is updated as soon as a new domain access barring parameter in the SIB 7 or another SIB, or in the paging message, or in the dedicated message is received. The value range of the validity region of the domain access barring parameter may be, but not limited to, {cell identifier (cell ID), frequency (frequency), routing area identifier (Route Area ID, RA ID), location area identifier (Location Area ID, LA ID), public land mobile network (Public Lands Mobile Network, PLMN), equivalent (Equivalent) PLMN, radio access technology (Radio Access Technology, RAT)}.

Specifically, an access barring parameter (Barring Factor) may be further carried in the SIB 7 or another SIB of the system broadcast message, or in the paging message, or in the dedicated message, so that the terminal generates a new random number and accesses or refrains from accessing the network according to the new random number and the access barring parameter. If the domain access barring parameter is not configured, the terminal may access or refrain from accessing the network of the domain according to the new random number and the access barring parameter.

Understandably, the SIB 7 is only an example, and may be replaced with another SIB, a paging message, or a dedicated message, for example, a radio resource connection setup (RRC Connection Setup) message, a radio resource connection release (RRC Connection Release) message, a radio bearer setup (Radio Bearer Setup) message, a radio bearer reconfiguration (Radio Bearer Reconfiguration) message, a radio bearer release (Radio Bearer Release) message, a physical channel reconfiguration (Physical Channel Reconfiguration) message, a transport channel reconfiguration (Transport Channel Reconfiguration) message, which is not limited in this embodiment.

Understandably, in a dedicated message, the access barring information may be set for the UE only, where the access barring information may directly indicate "not barred" or "barred", or use a Barring Factor as a basis of determination. Further, a barring parameter validity region and ACB time information may be configured.

Understandably, the access barring information is applicable to scenarios where the signaling and/or data services on all RBs of an idle UE or a UE engaged on URA_PCH, CELL_PCH, and CELL_FACH are initially set up or reused.

Optionally, in an optional implementation manner of this embodiment, in 301, the terminal receives a domain access barring parameter list corresponding to an access class sent by the access network device, where access class barring information of the access class indicates barring or no barring of access to the network; and obtains the domain access barring parameter corresponding to the access class of the terminal according to the access class of the terminal, where the access class barring information is sent by the access network device and received by the terminal. The value range of the domain access barring parameter may be, but not limited to, {0.00, 0.05, 0.10, 0.15, 0.20, 0.25, 0.30, 0.35, 0.40, 0.45, 0.50, 0.55, 0.60, 0.65, 0.70, 0.75, 0.80, 0.85, 0.90, 0.95}.

For example, the terminal receives a system broadcast message, a paging message, or a dedicated message, and a domain access barring parameter (Access Class Barring Factor for Domain Specific Access Restriction, ACB Factor for DSAR) list corresponding to the access class is included in a SIB 7 or another SIB of the system broadcast message, or in the paging message, or in the dedicated message, where the access class barring information of the access class indicates barring or no barring of access to the network.

Specifically, a domain access barring parameter list corresponding to an access class is carried in the SIB 7 or another SIB of the system broadcast message, or in the paging message, or in the dedicated message, where the access class barring information of the access class indicates barring or no barring of access to the network. If barring is applied to the paging response service, in the case of location area update or registration area update, the terminal determines, according to the location area/registration area access barring parameter, whether it is allowed to originate location area update or registration area update; or, if the terminal sends an access request due to a paging response or for other reasons, the terminal selects the access barring parameter of the corresponding domain access service according to the domain type of the access request, and determines whether it is allowed to send the access request.

Specifically, ACB time (ACB Timer) information may be further carried in the SIB 7 or another SIB of the system broadcast message, or in the paging message, or in the dedicated message, where the ACB time information is used to indicate a validity time of the domain access barring parameter list. Understandably, the validity time of the domain access barring parameter list may be indicated by the ACB time information. If the ACB time information is not configured, the existing timer may still be applied, that is, the domain access barring parameter list is updated as soon as a new system broadcast message, or a new paging message, or a new dedicated message is received. The value range of the validity time of the domain access barring parameter list may be, but not limited to, {0s, 4s, 8s, 16s, 32s, 64s, 128s, 256s, 512s}.

Specifically, parameter validity region information may be further carried in the SIB 7 or another SIB of the system broadcast message, or in the paging message, or in the dedicated message, where the parameter validity region information is used to indicate a validity region of the domain access barring parameter.

Understandably, the validity region of the domain access barring parameter may be indicated by the parameter validity region information. If the parameter validity region is configured, in the configured validity region, the UE still determines, according to the received access barring parameter, whether access is allowed, and updates the parameter when receiving a new domain access barring parameter in the paging message or the dedicated message.

If the parameter validity region information is not configured, the domain access barring parameter is updated as soon as a new domain access barring parameter in the SIB 7 or another SIB, or in the paging message, or in the dedicated message is received. The value range of the validity region of the domain access barring parameter may be, but not limited to, {cell identifier (cell ID), frequency (frequency), routing area identifier (Route Area ID, RA ID), location area identifier (Location Area ID, LA ID), public land mobile network (Public Lands Mobile Network, PLMN), equivalent (Equivalent) PLMN, radio access technology (Radio Access Technology, RAT)}.

Specifically, a domain access barring parameter list corresponding to an access class may be further carried in the SIB 7 or another SIB of the system broadcast message, or in the paging message, or in the dedicated message, where the access class barring information of the access class indicates barring or no barring of access to the network, so that the terminal generates a new random number and accesses or refrains from accessing the network according to the new random number and the access barring parameter. If the domain access barring parameter list is not configured, the terminal may access or refrain from accessing the network of the domain according to the new random number and the access barring parameter.

Understandably, the SIB 7 is only an example, and may be replaced with another SIB, a paging message, or a dedicated message, for example, a radio resource connection setup (RRC Connection Setup) message, a radio resource connection release (RRC Connection Release) message, a radio bearer setup (Radio Bearer Setup) message, a radio bearer reconfiguration (Radio Bearer Reconfiguration) message, a radio bearer release (Radio Bearer Release) message, a physical channel reconfiguration (Physical Channel Reconfiguration) message, a transport channel reconfiguration (Transport Channel Reconfiguration) message, which is not limited in this embodiment. Understandably, in a dedicated message, the access barring parameter may be set for the UE only, where the access barring parameter may directly indicate "not barred" or "barred", or use a Barring Factor as a basis of determination. Further, a barring parameter validity region and ACB time information may be configured.

Understandably, the access barring information is applicable to scenarios where the signaling and/or data services on all RBs of an idle UE or a UE engaged on URA_PCH, CELL_PCH, and CELL_FACH are initially set up or reused.

Optionally, in an optional implementation manner of this embodiment, in 301, the terminal receives the domain access barring parameter list corresponding to the access class sent by the access network device, and obtains the domain access barring parameter corresponding to the access class of the terminal according to the access class of the terminal. The value range of the domain access barring parameter corresponding to the access class may be, but not limited to, {0.00, 0.05, 0.10, 0.15, 0.20, 0.25, 0.30, 0.35, 0.40, 0.45, 0.50, 0.55, 0.60, 0.65, 0.70, 0.75, 0.80, 0.85, 0.90, 0.95}.

Optionally, in an optional implementation manner of this embodiment, in 301, the terminal may specifically receive a system broadcast message, a paging message, or a dedicated message sent by the access network device, where the system broadcast message, the paging message, or the dedicated message includes the domain access barring parameter list corresponding to the access class.

For example, the terminal receives a system broadcast message, a paging message, or a dedicated message, and a domain access barring parameter (ACB Factor for Domain Specific Access Restriction, ACB Factor for DSAR) list corresponding to the access class is included in the SIB 7 or another SIB of the system broadcast message, or in the paging message, or in the dedicated message.

Specifically, ACB time (ACB Timer) information may be further carried in the SIB 7 or another SIB of the system broadcast message, or in the paging message, or in the dedicated message, where the ACB time information is used to indicate a validity time of the domain access barring parameter list. Understandably, the validity time of the domain access barring parameter list may be indicated by the ACB time information. If the ACB time information is not configured, the existing timer may still be applied, that is, the domain access barring parameter list is updated as soon as a new system broadcast message, or a new paging message, or a new dedicated message is received. The value range of the validity time of the domain access barring parameter list may be, but not limited to, {0s, 4s, 8s, 16s, 32s, 64s, 128s, 256s, 512s}.

Specifically, parameter validity region information may be further carried in the SIB 7 or another SIB of the system broadcast message, or in the paging message, or in the dedicated message, where the parameter validity region information is used to indicate a validity region of the domain access barring parameter.

Understandably, the validity region of the domain access barring parameter may be indicated by the parameter validity region information. If the parameter validity region is configured, in the configured validity region, the UE still determines, according to the received access barring parameter, whether access is allowed, and updates the parameter when receiving a new domain access barring parameter in the paging message or the dedicated message.

If the parameter validity region information is not configured, the domain access barring parameter is updated as soon as a new domain access barring parameter in the SIB 7 or another SIB, or in the paging message, or in the dedicated message is received. The value range of the validity region of the domain access barring parameter may be, but not limited to, {cell identifier (cell ID), frequency (frequency), routing area identifier (Route Area ID, RA ID), location area identifier (Location Area ID, LA ID), public land mobile network (Public Lands Mobile Network, PLMN), equivalent (Equivalent) PLMN, radio access technology (Radio Access Technology, RAT)}.

Specifically, the domain access barring parameter list corresponding to the access class and intended for paging response service access control (Paging Permission with Access Control) and domain access service access control (Domain Specific Access Restriction) is carried in the SIB 7 or another SIB of the system broadcast message, or in the paging message, or in the dedicated message. If barring is applied to the paging response service, in the case of location area update or registration area update, the terminal determines, according to the location area/registration area access barring parameter, whether it is allowed to originate location area update or registration area update; or, if the terminal sends an access request due to a paging response or for other reasons, the terminal selects the access barring parameter of the corresponding domain access service according to the domain type of the access request, and determines whether it is allowed to send the access request.

Specifically, an access barring parameter (Barring Factor, ACB Factor) list corresponding to the access class of the terminal may be further carried in the SIB 7 or another SIB of the system broadcast message, or in the paging message, or in the dedicated message, so that the terminal generates a new random number and accesses or refrains from accessing the network according to the new random number and the access barring parameter. If the domain access barring parameter list is not configured, the terminal may access or refrain from accessing the network of the domain according to the new random number and the access barring parameter list.

Understandably, the SIB 7 is only an example, and may be replaced with another SIB, a paging message, or a dedicated message, for example, a radio resource connection setup (RRC Connection Setup) message, a radio resource connection release (RRC Connection Release) message, a radio bearer setup (Radio Bearer Setup) message, a radio bearer reconfiguration (Radio Bearer Reconfiguration) message, a radio bearer release (Radio Bearer Release) message, a physical channel reconfiguration (Physical Channel Reconfiguration) message, a transport channel reconfiguration (Transport Channel Reconfiguration) message, which is not limited in this embodiment. Understandably, in a dedicated message, the access barring parameter may be set for the UE only, where the access barring parameter may directly indicate "not barred" or "barred", or use a Barring Factor as a basis of determination. Further, a barring parameter validity region and ACB time information may be configured.

Understandably, the access barring information is applicable to scenarios where the signaling and/or data services on all RBs of an idle UE or a UE engaged on URA_PCH, CELL_PCH, and CELL_FACH are initially set up or reused.

Optionally, in an optional implementation manner of this embodiment, in 301, the terminal may specifically receive a paging message sent by the access network device, where the paging message includes a domain access barring parameter corresponding to a service originated (originating) or terminated (terminating) by the terminal, or the paging message includes a service type access barring parameter corresponding to a service type of the terminal, where the service type access barring parameter includes a conversation (Conversational) service access barring parameter and/or a streaming (Streaming) service access barring parameter and/or an interactive (Interactive) service access barring parameter and/or a background (Background) service access barring parameter. Specifically, the paging message may further carry a new paging cause value, used to indicate that the paging message is caused by a change of the domain access barring parameter or a change of the service type access barring parameter.

For example, the terminal receives a paging message, where the paging message includes a domain access barring parameter (ACB Factor for Domain Specific Access Restriction, ACB Factor for DSAR) corresponding to a service originated (originating) or terminated (terminating) by the terminal. Specifically, a new paging cause value "access barring parameter change (Barring Parameter Change)" is added in a paging cause (Paging Cause) of the paging message to indicate that the paging message is caused by a change of the domain access barring parameter or a change of the service type access barring parameter.

Specifically, a corresponding access barring parameter may be further carried in a corresponding field of the paging message according to whether the service is originated (originating) or terminated (terminating) by the terminal, so that the terminal generates a new random number and accesses or refrains from accessing the network according to the new random number and the access barring parameter.

Optionally, in an optional implementation manner of this embodiment, in 302, the terminal receives access class barring information sent by the access network device; if the access class barring information indicates that the terminal is barred from accessing the network, the terminal generates the random number; or, if the access class barring information indicates that the terminal is not barred from accessing the network, the terminal generates the random number.

In this embodiment, a terminal obtains a domain access barring parameter, where the domain access barring parameter includes a CS domain access barring parameter and/or a PS domain access barring parameter; and then the terminal generates a random number, so that the terminal accesses or refrains from accessing the network of the domain according to the random number and the domain access barring parameter. By using the random number and the domain access barring parameter, domain-related access control is exercised for the service originated or performed by the terminal, which solves the problem in the prior art that the access network device can control only the terminal access corresponding to a specified AC in the access control, thereby improving flexibility of the access control.

Understandably, the domain access barring parameter is only an example, and a service type access barring parameter may apply instead, for example, a conversation (Conversational) service access barring parameter and/or a streaming (Streaming) service access barring parameter and/or an interactive (Interactive) service access barring parameter and/or a background (Background) service access barring parameter, which is not limited in this embodiment.

FIG. 4 is a schematic flowchart of an access control method according to another embodiment of the present application. As shown in FIG. 4:
401. An access network device generates a domain access barring parameter, where the domain access barring parameter includes a CS domain access barring parameter (ACB Factor for CS Domain Specific Access Restriction, ACB Factor for CS DSAR) and/or a PS domain access barring parameter (ACB Factor for PS Domain Specific Access Restriction, ACB Factor for PS DSAR).
402. The access network device sends the domain access barring parameter to a terminal, so that the terminal generates a random number and the terminal accesses or refrains from accessing a network of the domain according to the random number and the domain access barring parameter.

Optionally, in an optional implementation manner of this embodiment, in 401, the access network device generates the domain access barring parameter. The value range of the domain access barring parameter may be, but not limited to, {0.00, 0.05, 0.10, 0.15, 0.20, 0.25, 0.30, 0.35, 0.40, 0.45, 0.50, 0.55, 0.60, 0.65, 0.70, 0.75, 0.80, 0.85, 0.90, 0.95}.

Optionally, in an optional implementation manner of this embodiment, in 402, the access network device sends a system broadcast message, a paging message, or a dedicated message to the terminal, where the system broadcast message, the paging message, or the dedicated message includes the domain access barring parameter.

For example, the access network device sends a system broadcast message, a paging message, or a dedicated message, and the domain access barring parameter (Barring Factor for Domain Specific Access Restriction) is included in a SIB 7 or another SIB of the system broadcast message, or in the paging message, or in the dedicated message.

Specifically, the domain access barring parameters of paging response service access control (Paging Permission with Access Control) and domain access service access control (Domain Specific Access Restriction) are carried in the SIB 7 or another SIB of the system broadcast message, or in the paging message, or in the dedicated message. If barring is applied to the paging response service, in the case of location area update or registration area update, the terminal determines, according to barring factor information in the location area/registration area access barring parameter, whether it is allowed to originate location area update or registration area update; or, if the terminal sends an access request due to a paging response or for other reasons, the terminal selects the access barring parameter of the corresponding domain access service according to the domain type of the access request, and determines whether it is allowed to send the access request.

Specifically, ACB time (ACB Timer) information may be further carried in the SIB 7 or another SIB of the system broadcast message, or in the paging message, or in the dedicated message, where the ACB time information is used to indicate a validity time of the domain access barring parameter. Understandably, the validity time of the domain access barring parameter may be indicated by the ACB time information. If the ACB time information is not configured, the terminal may still use the existing timer, that is, update the domain access barring parameter when receiving a new system broadcast message, or a new paging message, or a new dedicated message. The value range of the validity time of the domain access barring parameter maybe, but not limited to, {0s, 4s, 8s, 16s, 32s, 64s, 128s, 256s, 512s}.

Specifically, parameter validity region information may be further carried in the SIB 7 or another SIB of the system broadcast message, or in the paging message, or in the dedicated message, where the parameter validity region information is used to indicate a validity region of the domain access barring parameter. Understandably, the validity region of the domain access barring parameter may be indicated by the parameter validity region information. If the parameter validity region is configured, in the configured validity region, the UE still determines, according to the received access barring parameter, whether access is allowed, and updates the parameter when receiving a new domain access barring parameter in the paging message or the dedicated message.

If the parameter validity region information is not configured, the domain access barring parameter is updated as soon as a new domain access barring parameter in the SIB 7 or another SIB, or in the paging message, or in the dedicated message is received. The value range of the validity region of the domain access barring parameter may be, but not limited to, {cell identifier (cell ID), frequency (frequency), routing area identifier (Route Area ID, RA ID), location area identifier (Location Area ID, LA ID), public land mobile network (Public Lands Mobile Network, PLMN), equivalent (Equivalent) PLMN, radio access technology (Radio Access Technology, RAT)}.

Specifically, an access barring parameter (Barring Factor) may be further carried in the SIB 7 or another SIB of the system broadcast message, or in the paging message, or in the dedicated message, so that the terminal generates a new random number and accesses or refrains from accessing the network according to the new random number and the access barring parameter. If the domain access barring parameter is not configured, the terminal may access or refrain from accessing the network of the domain according to the new random number and the access barring parameter.

Understandably, the SIB 7 is only an example, and may be replaced with another SIB, a paging message, or a dedicated message, for example, a radio resource connection setup (RRC Connection Setup) message, a radio resource connection release (RRC Connection Release) message, a radio bearer setup (Radio Bearer Setup) message, a radio bearer reconfiguration (Radio Bearer Reconfiguration) message, a radio bearer release (Radio Bearer Release) message, a physical channel reconfiguration (Physical Channel Reconfiguration) message, a transport channel reconfiguration (Transport Channel Reconfiguration) message, which is not limited in this embodiment. Understandably, in a dedicated message, the access barring parameter may be set for the UE only, where the access barring parameter may directly indicate "not barred" or "barred", or use a Barring Factor as a basis of determination. Further, a barring parameter validity region and ACB time information may be configured.

Understandably, the access barring information is applicable to scenarios where the signaling and/or data services on all RBs of an idle UE or a UE engaged on URA_PCH, CELL_PCH, and CELL_FACH are initially set up or reused.

Optionally, in an optional implementation manner of this embodiment, in 401, the access network device generates a domain access barring parameter list corresponding to an access class, where access class barring information of the access class indicates barring or no barring of access to the network, so that the terminal obtains the domain access barring parameter corresponding to the access class of the terminal according to the access class of the terminal, where the access class barring information is sent by the access network device to the terminal. The value range of the domain access barring parameter may be, but not limited to, {0.00, 0.05, 0.10, 0.15, 0.20, 0.25, 0.30, 0.35, 0.40, 0.45, 0.50, 0.55, 0.60, 0.65, 0.70, 0.75, 0.80, 0.85, 0.90, 0.95}.

Optionally, in an optional implementation manner of this embodiment, in 402, the access network device sends a system broadcast message, a paging message, or a dedicated message to the terminal, and a domain access barring parameter (Access Class Barring Factor for Domain Specific Access Restriction, ACB Factor for DSAR) list corresponding to the access class is carried in a SIB 7 or another SIB of the system broadcast message, or in the paging message, or in the dedicated message, where the access class barring information of the access class indicates barring or no barring of access to the network.

Specifically, a domain access barring parameter list corresponding to an access class is carried in the SIB 7 or another SIB of the system broadcast message, or in the paging message, or in the dedicated message, where the access class barring information of the access class indicates barring or no barring of access to the network. If barring is applied to the paging response service, in the case of location area update or registration area update, the terminal determines, according to the location area/registration area access barring parameter, whether it is allowed to originate location area update or registration area update; or, if the terminal sends an access request due to a paging response or for other reasons, the terminal selects the access barring parameter of the corresponding domain access service according to the domain type of the access request, and determines whether it is allowed to send the access request.

Specifically, ACB time (ACB Timer) information may be further carried in the SIB 7 or another SIB of the system broadcast message, or in the paging message, or in the dedicated message, where the ACB time information is used to indicate a validity time of the domain access barring parameter list. Understandably, the validity time of the domain access barring parameter list may be indicated by the ACB time information. If the ACB time information is not configured, the terminal may still use the existing timer, that is, update the domain access barring parameter list when receiving a new system broadcast message, or a new paging message, or a new dedicated message. The value range of the validity time of the domain access barring parameter list may be, but not limited to, {0s, 4s, 8s, 16s, 32s, 64s, 128s, 256s, 512s}.

Specifically, parameter validity region information may be further carried in the SIB 7 or another SIB of the system broadcast message, or in the paging message, or in the dedicated message, where the parameter validity region information is used to indicate a validity region of the domain access barring parameter. Understandably, the validity region of the domain access barring parameter may be indicated by the parameter validity region information. If the parameter validity region is configured, in the configured validity region, the UE still determines, according to the received access barring parameter, whether access is allowed, and updates the parameter when receiving a new domain access barring parameter in the paging message or the dedicated message.

If the parameter validity region information is not configured, the domain access barring parameter is updated as soon as a new domain access barring parameter in the SIB 7 or another SIB, or in the paging message, or in the dedicated message is received. The value range of the validity region of the domain access barring parameter may be, but not limited to, {cell identifier (cell ID), frequency (frequency), routing area identifier (Route Area ID, RA ID), location area identifier (Location Area ID, LA ID), public land mobile network (Public Lands Mobile Network, PLMN), equivalent (Equivalent) PLMN, radio access technology (Radio Access Technology, RAT)}.

Specifically, a domain access barring parameter list corresponding to an access class may be further carried in the SIB 7 or another SIB of the system broadcast message, or in the paging message, or in the dedicated message, where the access class information of the access class indicates barring or no barring of access to the network, so that the terminal generates a new random number and accesses or refrains from accessing the network according to the new random number and the access barring parameter. If the domain access barring parameter list is not configured, the terminal may access or refrain from accessing the network of the domain according to the new random number and the access barring parameter.

Understandably, the SIB 7 is only an example, and may be replaced with another SIB, a paging message, or a dedicated message, for example, a radio resource connection setup (RRC Connection Setup) message, a radio resource connection release (RRC Connection Release) message, a radio bearer setup (Radio Bearer Setup) message, a radio bearer reconfiguration (Radio Bearer Reconfiguration) message, a radio bearer release (Radio Bearer Release) message, a physical channel reconfiguration (Physical Channel Reconfiguration) message, a transport channel reconfiguration (Transport Channel Reconfiguration) message, which is not limited in this embodiment. Understandably, in a dedicated message, the access barring parameter may be set for the UE only, where the access barring parameter may directly indicate "not barred" or "barred", or use a Barring Factor as a basis of determination. Further, a barring parameter validity region and ACB time information may be configured.

Understandably, the access barring information is applicable to scenarios where the signaling and/or data services on all RBs of an idle UE or a UE engaged on URA_PCH, CELL_PCH, and CELL_FACH are initially set up or reused.

Optionally, in an optional implementation manner of this embodiment, in 401, the access network device generates the domain access barring parameter list corresponding to the access class, so that the terminal obtains the domain access barring parameter corresponding to the access class of the terminal according to the access class of the terminal. The value range of the domain access barring parameter corresponding to the access class may be, but not limited to, {0.00, 0.05, 0.10, 0.15, 0.20, 0.25, 0.30, 0.35, 0.40, 0.45, 0.50, 0.55, 0.60, 0.65, 0.70, 0.75, 0.80, 0.85, 0.90, 0.95}.

Optionally, in an optional implementation manner of this embodiment, in 301, the access network device may specifically send a system broadcast message, a paging message, or a dedicated message to the terminal, where the system broadcast message, the paging message, or the dedicated message includes the domain access barring parameter list corresponding to the access class.

For example, the access network device sends a system broadcast message, a paging message, or a dedicated message, and a domain access barring parameter (ACB Factor for Domain Specific Access Restriction, ACB Factor for DSAR) list corresponding to the access class is included in the SIB 7 or another SIB of the system broadcast message, or in the paging message, or in the dedicated message.

Specifically, ACB time (ACB Timer) information may be further carried in the SIB 7 or another SIB of the system broadcast message, or in the paging message, or in the dedicated message, where the ACB time information is used to indicate a validity time of the domain access barring parameter list. Understandably, the validity time of the domain access barring parameter list may be indicated by the ACB time information. If the ACB time information is not configured, the terminal may still use the existing timer, that is, update the domain access barring parameter list when receiving a new system broadcast message, or a new paging message, or a new dedicated message. The value range of the validity time of the domain access barring parameter list may be, but not limited to, {0s, 4s, 8s, 16s, 32s, 64s, 128s, 256s, 512s}.

Specifically, parameter validity region information may be further carried in the SIB 7 or another SIB of the system broadcast message, or in the paging message, or in the dedicated message, where the parameter validity region information is used to indicate a validity region of the domain access barring parameter.

Understandably, the validity region of the domain access barring parameter may be indicated by the parameter validity region information. If the parameter validity region is configured, in the configured validity region, the UE still determines, according to the received access barring parameter, whether access is allowed, and updates the parameter when receiving a new domain access barring parameter in the paging message or the dedicated message.

If the parameter validity region information is not configured, the domain access barring parameter is updated as soon as a new domain access barring parameter in the SIB 7 or another SIB, or in the paging message, or in the dedicated message is received. The value range of the validity region of the domain access barring parameter may be, but not limited to, {cell identifier (cell ID), frequency (frequency), routing area identifier (Route Area ID, RA ID), location area identifier (Location Area ID, LA ID), public land mobile network (Public Lands Mobile Network, PLMN), equivalent (Equivalent) PLMN, radio access technology (Radio Access Technology, RAT)}.

Specifically, the domain access barring parameter list corresponding to the access class and intended for paging response service access control (Paging Permission with Access Control) and domain access service access control (Domain Specific Access Restriction) is carried in the SIB 7 or another SIB of the system broadcast message, or in the paging message, or in the dedicated message. If barring is applied to the paging response service, in the case of location area update or registration area update, the terminal determines, according to the location area/registration area access barring parameter, whether it is allowed to originate location area update or registration area update; or, if the terminal sends an access request due to a paging response or for other reasons, the terminal selects the access barring parameter of the corresponding domain access service according to the domain type of the access request, and determines whether it is allowed to send the access request.

Specifically, an access barring parameter (Barring Factor, ACB Factor) list corresponding to the access class of the terminal may be further carried in the SIB 7 or another SIB of the system broadcast message, or in the paging message, or in the dedicated message, so that the terminal generates a new random number and accesses or refrains from accessing the network according to the new random number and the access barring parameter. If the domain access barring parameter list is not configured, the terminal may access or refrain from accessing the network of the domain according to the new random number and the access barring parameter list.

Understandably, the SIB 7 is only an example, and may be replaced with another SIB, a paging message, or a dedicated message, for example, a radio resource connection setup (RRC Connection Setup) message, a radio resource connection release (RRC Connection Release) message, a radio bearer setup (Radio Bearer Setup) message, a radio bearer reconfiguration (Radio Bearer Reconfiguration) message, a radio bearer release (Radio Bearer Release) message, a physical channel reconfiguration (Physical Channel Reconfiguration) message, a transport channel reconfiguration (Transport Channel Reconfiguration) message, which is not limited in this embodiment. Understandably, in a dedicated message, the access barring parameter may be set for the UE only, where the access barring parameter may directly indicate "not barred" or "barred", or use a Barring Factor as a basis of determination. Further, a barring parameter validity region and ACB time information may be configured.

Understandably, the access barring information is applicable to scenarios where the signaling and/or data services on all RBs of an idle UE or a UE engaged on URA_PCH, CELL_PCH, and CELL_FACH are initially set up or reused.

Optionally, in an optional implementation manner of this embodiment, in 402, the access network device sends a paging message to the terminal, where the paging message includes a domain access barring parameter corresponding to a service originated or terminated by the terminal, or the paging message includes a service type access barring parameter corresponding to a service type of the terminal, where the service type access barring parameter includes a conversation (Conversational) service access barring parameter and/or a streaming (Streaming) service access barring parameter and/or an interactive (Interactive) service access barring parameter and/or a background (Background) service access barring parameter. Specifically, the paging message may further carry a new paging cause value, used to indicate that the paging message is caused by a change of the domain access barring parameter or a change of the service type access barring parameter.

For example, the access network device sends a paging message, where the paging message includes a domain access barring parameter (ACB Factor for Domain Specific Access Restriction, ACB Factor for DSAR) corresponding to a service originated (originating) or terminated (terminating) by the terminal. Specifically, a new paging cause value "access barring parameter change (Barring Parameter Change)" is added in a paging cause (Paging Cause) of the paging message to indicate that the paging message is caused by a change of the domain access barring parameter or a change of the service type access barring parameter.

Specifically, a corresponding access barring parameter may be further carried in a corresponding field of the paging message according to whether the service is originated (originating) or terminated (terminating) by the terminal, so that the terminal generates a new random number and accesses or refrains from accessing the network according to the new random number and the access barring parameter.

In this embodiment, an access network device generates a domain access barring parameter, where the domain access barring parameter includes a CS domain access barring parameter and/or a PS domain access barring parameter; and then the access network device sends the domain access barring parameter to a terminal, so that the terminal generates a random number and the terminal accesses or refrains from accessing the network of the domain according to the random number and the domain access barring parameter. By using the random number and the domain access barring parameter, domain-related access control is exercised for the service originated or performed by the terminal, which solves the problem in the prior art that the access network device can control only the terminal access corresponding to a specified AC in the access control, thereby improving flexibility of the access control.

Understandably, the domain access barring parameter is only an example, and a service type access barring parameter may apply instead, for example, a conversation (Conversational) service access barring parameter and/or a streaming (Streaming) service access barring parameter and/or an interactive (Interactive) service access barring parameter and/or a background (Background) service access barring parameter, which is not limited in this embodiment.

It should be noted that the method embodiments described above may be used together to solve the problem in the prior art that the access network device can control only the terminal access corresponding to a specified AC in the access control, thereby improving flexibility of the access control.

It should be noted that, for brevity, the above method embodiments are represented as a series of actions. But those skilled in the art should appreciate that the present application is not limited to the order of the described actions, because according to the present application, some steps may adopt other order or occur simultaneously. It should be further understood by persons skilled in the art that the embodiments described in the specification all belong to exemplary embodiments, and the involved actions and modules are not necessarily required by the present application.

In the above embodiments, the description of each embodiment has its emphasis, and for a part that is not detailed in some embodiments, reference may be made to the relevant description of other embodiments.

FIG. 5 is a schematic structural diagram of a terminal according to another embodiment of the present application. As shown in FIG. 5, the terminal in this embodiment may include a receiver 51 and a processor 52. The receiver 51 is configured to receive from an access network device a message that is used to reject or release a service originated or performed by the terminal, where the message includes domain wait time information, where the domain wait time information is used to indicate a wait time specific to a domain of the service; and the processor 52 is configured to refrain from originating the service in a time indicated by the domain wait time information.

The domain wait time information includes CS domain wait time information and/or PS domain wait time information.

Understandably, the domain wait time is only an example, and a service type wait time may apply instead, for example, a conversation (Conversational) service wait time and/or a streaming (Streaming) service wait time and/or an interactive (Interactive) service wait time and/or a background (Background) service wait time; or an additional wait time (additional wait time) regardless of the domain or the service type, which is not limited in this embodiment.

Optionally, in an optional implementation manner of this embodiment, the domain wait time information is PS domain wait time information; the processor 52 may be specifically configured to: when the receiver receives the message for a preset number of times, refrain from originating the service in a first preset time, where the first preset time is greater than the time indicated by the domain wait time information; or refrain from originating the service in a second preset time, where the second preset time is greater than the time indicated by the domain wait time information; or generate a random number, and originate or refrain from originating the service according to the random number and a preset access barring parameter when the time indicated by the domain wait time information expires; or generate a random access class, and if the random access class is the same as an access class of the terminal, originate the service when the time indicated by the domain wait time information expires, and if the random access class is different from the access class of the terminal, refrain from originating the service when the time indicated by the domain wait time information expires.

Optionally, in an optional implementation manner of this embodiment, the domain wait time information is PS domain wait time information; the processor 52 may be specifically configured to: if the random number is less than the access barring parameter, originate the service when the time indicated by the domain wait time information expires, and if the random number is greater than or equal to the access barring parameter, refrain from originating the service when the time indicated by the domain wait time information expires; or if the random number is greater than or equal to the access barring parameter, originate the service when the time indicated by the domain wait time information expires, and if the random number is less than the access barring parameter, refrain from originating the service when the time indicated by the domain wait time information expires.

In this embodiment, a terminal uses a receiver to receive from an access network device a message that is used to reject or release a service originated or performed by the terminal, where the message includes domain wait time information, where the domain wait time information is used to indicate a wait time specific to a domain of the service, so that the processor refrains from originating the service in a time indicated by the domain wait time information. By using the wait time specific to the domain of the service that is indicated by the domain wait time information, domain-related access control is exercised for the service originated or performed by the terminal, which solves the problem in the prior art that the access network device can control only the terminal access corresponding to a specified AC in the access control, thereby improving flexibility of the access control.

Understandably, the PS domain wait time is only an example, and a CS domain wait time or a service type wait time may apply instead, for example, a conversation (Conversational) service wait time and/or a streaming (Streaming) service wait time and/or an interactive (Interactive) service wait time and/or a background (Background) service wait time; or an additional wait time (additional wait time) regardless of the domain or the service type, which is not limited in this embodiment.

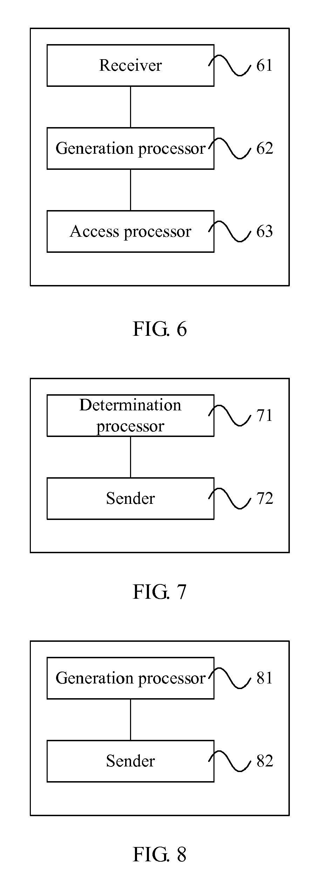

FIG. 6 is a schematic structural diagram of a terminal according to another embodiment of the present application. As shown in FIG. 6, the terminal in this embodiment may include a receiver 61, a generation processor 62, and an access processor 63. The receiver 61 is configured to obtain a domain access barring parameter, where the domain access barring parameter includes a CS domain access barring parameter and/or a PS domain access barring parameter; the generation processor 62 is configured to generate a random number; and the access processor 63 is configured to access or refrain from accessing a network of the domain according to the random number and the domain access barring parameter.

Optionally, in an optional implementation manner of this embodiment, the access processor 63 may be specifically configured to: access the network of the domain if the random number is less than the domain access barring parameter, and refrain from accessing the network of the domain if the random number is greater than or equal to the domain access barring parameter; or, access the network of the domain if the random number is greater than or equal to the domain access barring parameter, and refrain from accessing the network of the domain if the random number is less than the domain access barring parameter.

Optionally, in an optional implementation manner of this embodiment, the receiver 61 may be specifically configured to: receive access class barring information sent by the access network device, and obtain a domain access barring parameter corresponding to the access class barring information according to the access class barring information; or receive the domain access barring parameter sent by the access network device; or receive a domain access barring parameter list that is corresponding to an access class and sent by the access network device, where the access class barring information of the access class indicates barring or no barring of access to the network, and obtain a domain access barring parameter corresponding to the access class of the terminal according to the access class of the terminal, where the access class barring information is sent by the access network device and received by the terminal; or receive the domain access barring parameter list corresponding to the access class sent by the access network device, and obtain a domain access barring parameter corresponding to the access class of the terminal according to the access class of the terminal.

Optionally, in an optional implementation manner of this embodiment, the receiver 61 may be specifically configured to: receive a system broadcast message, a paging message, or a dedicated message sent by the access network device, where the system broadcast message, the paging message, or the dedicated message includes the domain access barring parameter; or receive a paging message sent by the access network device, where the paging message includes a domain access barring parameter corresponding to a service originated or terminated by the terminal.

Specifically, the paging message may further include a paging cause value, used to indicate that the paging message is caused by a change of the domain access barring parameter or a change of the service type access barring parameter.

Optionally, in an optional implementation manner of this embodiment, the receiver 61 may be specifically configured to receive a system broadcast message, a paging message, or a dedicated message sent by the access network device, where the system broadcast message, the paging message, or the dedicated message includes a domain access barring parameter list corresponding to an access class, where the access class barring information of the access class indicates barring or no barring of access to the network.

Optionally, in an optional implementation manner of this embodiment, the receiver 61 may be specifically configured to receive a system broadcast message, a paging message, or a dedicated message sent by the access network device, where the system broadcast message, the paging message, or the dedicated message includes the domain access barring parameter list corresponding to the access class.

It should be noted that the system broadcast message, the paging message, or the dedicated message may further include parameter validity region information, and the parameter validity region information is used to indicate a validity region of the domain access barring parameter or the service type access barring parameter.

Optionally, in an optional implementation manner of this embodiment, the generation processor 62 may be specifically configured to receive access class barring information sent by the access network device; and generate the random number if the access class barring information indicates that the terminal is barred from accessing the network, or generate the random number if the access class barring information indicates that the terminal is not barred from accessing the network.

In this embodiment, a terminal uses a receiver to obtain a domain access barring parameter, where the domain access barring parameter includes a CS domain access barring parameter and/or a PS domain access barring parameter; and then a generation processor generates a random number, so that an access processor accesses or refrains from accessing the network of the domain according to the random number and the domain access barring parameter. By using the random number and the domain access barring parameter, domain-related access control is exercised for the service originated or performed by the terminal, which solves the problem in the prior art that the access network device can control only the terminal access corresponding to a specified AC in the access control, thereby improving flexibility of the access control.

FIG. 7 is a schematic structural diagram of an access network device according to another embodiment of the present application. As shown in FIG. 7, the access network device in this embodiment may include a determination processor 71 and a sender 72. The determination processor 71 is configured to determine a need of rejecting or releasing a service originated or performed by a terminal; and the sender 72 is configured to send, to the terminal, a message used to reject or release a service originated or performed by the terminal, where the message includes domain wait time information, so that the terminal refrains from originating the service in a time indicated by the domain wait time information, where the domain wait time information is used to indicate a wait time specific to a domain of the service.

The domain wait time information includes CS domain wait time information and/or PS domain wait time information.

In this embodiment, an access network device uses a determination processor to determine a need of rejecting or releasing a service originated by a terminal, and therefore, a sender sends, to the terminal, a message used to reject or release a service originated or performed by the terminal, where the message includes domain wait time information, so that the terminal refrains from originating the service in a time indicated by the domain wait time information, where the domain wait time information is used to indicate a wait time specific to a domain of the service. By using the wait time specific to the domain of the service that is indicated by the domain wait time information, domain-related access control is exercised for the service originated or performed by the terminal, which solves the problem in the prior art that the access network device can control only the terminal access corresponding to a specified AC in the access control, thereby improving flexibility of the access control.

Understandably, the domain wait time is only an example, and a service type wait time may apply instead, for example, a conversation (Conversational) service wait time and/or a streaming (Streaming) service wait time and/or an interactive (Interactive) service wait time and/or a background (Background) service wait time; or an additional wait time (additional wait time) regardless of the domain or the service type, which is not limited in this embodiment.

FIG. 8 is a schematic structural diagram of an access network device according to another embodiment of the present application. The access network device may be an evolved NodeB or a home evolved NodeB in the E-UTRAN, or may be a radio network controller in the UTRAN, or may be an access network device controller in the GERAN. The access network device in this embodiment may include a generation processor 81 and a sender 82. The generation processor 81 is configured to generate a domain access barring parameter, where the domain access barring parameter includes a CS domain access barring parameter and/or a PS domain access barring parameter. The sender 82 is configured to send the domain access barring parameter to a terminal, so that the terminal generates a random number and the terminal accesses or refrains from accessing a network of the domain according to the random number and the domain access barring parameter.

Optionally, in an optional implementation manner of this embodiment, the generation processor 81 may be specifically configured to: generate a domain access barring parameter; or generate a domain access barring parameter list corresponding to an access class, where access class barring information of the access class indicates barring or no barring of access to the network, so that the terminal obtains the domain access barring parameter corresponding to the access class of the terminal according to the access class of the terminal, where the access class barring information is sent by the access network device to the terminal; or generate a domain access barring parameter list corresponding to the access class, so that the terminal obtains the domain access barring parameter corresponding to the access class of the terminal according to the access class of the terminal.

Optionally, in an optional implementation manner of this embodiment, the sender 82 may be specifically configured to: send a system broadcast message, a paging message, or a dedicated message to the terminal, where the system broadcast message, the paging message, or the dedicated message includes the domain access barring parameter; or send a paging message to the terminal, where the paging message includes a domain access barring parameter corresponding to a service originated or terminated by the terminal, or the paging message includes a service type access barring parameter corresponding to a conversation (Conversational) service and/or a streaming (Streaming) service and/or an interactive (Interactive) service and/or a background (Background) service.

Specifically, the paging message may further includes a paging cause value, used to indicate that the paging message is caused by a change of the domain access barring parameter or a change of the service type access barring parameter.

Optionally, in an optional implementation manner of this embodiment, the sender 82 may be specifically configured to send a system broadcast message, a paging message, or a dedicated message to the terminal, where the system broadcast message, the paging message, or the dedicated message includes a domain access barring parameter list corresponding to an access class, where the access class barring information of the access class indicates barring or no barring of access to the network.

Optionally, in an optional implementation manner of this embodiment, the sender 82 may be specifically configured to send a system broadcast message, a paging message, or a dedicated message to the terminal, where the system broadcast message, the paging message, or the dedicated message includes the domain access barring parameter list corresponding to the access class.

It should be noted that the system broadcast message, the paging message, or the dedicated message may further includes parameter validity region information, and the parameter validity region information is used to indicate a validity region of the domain access barring parameter or the service type access barring parameter.

In this embodiment, an access network device uses a generation processor to generate a domain access barring parameter, where the domain access barring parameter includes a CS domain access barring parameter and/or a PS domain access barring parameter; and then a sender sends the domain access barring parameter to a terminal, so that the terminal generates a random number and the terminal accesses or refrains from accessing a network of the domain according to the random number and the domain access barring parameter. By using the random number and the domain access barring parameter, domain-related access control is exercised for the service originated or performed by the terminal, which solves the problem in the prior art that the access network device can control only the terminal access corresponding to a specified AC in the access control, thereby improving flexibility of the access control.

Understandably, the domain access barring parameter is only an example, and a service type access barring parameter may apply instead, for example, a conversation (Conversational) service access barring parameter and/or a streaming (Streaming) service access barring parameter and/or an interactive (Interactive) service access barring parameter and/or a background (Background) service access barring parameter, which is not limited in this embodiment.

It may be clearly understood by persons skilled in the art that, for the purpose of convenient and brief description, a detailed working process of the foregoing system, apparatus, and unit, reference may be made to the corresponding process in the foregoing method embodiments, and the details will not be described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented through hardware, or may also be implemented in a form of hardware plus a software functional module.

The integrated unit implemented in a form of software functional unit may be stored in a computer readable storage medium. The foregoing software functional unit is stored in a storage medium, and includes several instructions for instructing a computer device (which may be a personal computer, a server, or a network device) or a processor (processor) to perform a part of the steps of the methods described in the embodiments of the present application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended for describing the technical solutions of the present application rather than limiting the present application. Although the present application is described in detail with reference to the foregoing embodiments, persons of ordinary skill in the art should understand that they may still make modifications to the technical solutions described in the foregoing embodiments, or make equivalent replacements to some technical features thereof as long as the modifications and replacements do not cause the essence of corresponding technical solutions to depart from the spirit and scope of the technical solutions of the embodiments of the present application.

## Claims

1. An access control method, comprising:
receiving, by a terminal from an access network device, a message that is used to reject or release a service originated or performed by the terminal, wherein the message comprises domain wait time information or service type wait time information, wherein the domain wait time information is used to indicate a wait time specific to a domain of the service, or the service type wait time information is used to indicate a wait time specific to a service type of the service; and
refraining, by the terminal, from originating the service in a time indicated by the domain wait time information or the service type wait time information.

2. The method according to claim 1, wherein:
the domain wait time information comprises CS domain wait time information and/or PS domain wait time information; or
the service type wait time information comprises conversation service wait time information and/or streaming service wait time information and/or interactive service wait time information and/or background service wait time information.

3. The method according to claim 1 or 2, wherein the refraining, by the terminal, from originating the service in the time indicated by the domain wait time information or the service type wait time information, comprises:
when the terminal receives the message for a preset number of times, refraining, by the terminal, from originating the service in a first preset time, wherein the first preset time is greater than the time indicated by the domain wait time information or the service type wait time information; or
refraining, by the terminal, from originating the service in a second preset time, wherein the second preset time is greater than the time indicated by the domain wait time information or the service type wait time information; or
generating, by the terminal, a random number, and originating or refraining from originating the service according to the random number and a preset access barring parameter when the time indicated by the domain wait time information or the service type wait time information expires; or
generating, by the terminal, a random access class, and if the random access class is the same as an access class of the terminal, originating, by the terminal, the service when the time indicated by the domain wait time information or the service type wait time information expires; and if the random access class is different from the access class of the terminal, refraining, by the terminal, from originating the service when the time indicated by the domain wait time information or the service type wait time information expires.

4. The method according to claim 3, wherein the originating or refraining from originating, by the terminal, the service according to the random number and the preset access barring parameter when the time indicated by the domain wait time information or the service type wait time information expires, comprises:
if the random number is less than the access barring parameter, originating, by the terminal, the service when the time indicated by the domain wait time information or the service type wait time information expires; and if the random number is greater than or equal to the access barring parameter, refraining, by the terminal, from originating the service when the time indicated by the domain wait time information or the service type wait time information expires; or
if the random number is greater than or equal to the access barring parameter, originating, by the terminal, the service when the time indicated by the domain wait time information or the service type wait time information expires; and if the random number is less than the access barring parameter, refraining, by the terminal, from originating the service when the time indicated by the domain wait time information or the service type wait time information expires.

5. An access control method, comprising:
obtaining, by a terminal, a domain access barring parameter or a service type access barring parameter, wherein the domain access barring parameter comprises a CS domain access barring parameter and/or a PS domain access barring parameter, or the service type access barring parameter comprises a conversation service access barring parameter and/or a streaming service access barring parameter and/or an interactive service access barring parameter and/or a background service access barring parameter;
generating, by the terminal, a random number; and
accessing or refraining from accessing, by the terminal, a network of the domain or a network of the service type according to the random number and the domain access barring parameter, or according to the random number and the service type access barring parameter.

6. The method according to claim 5, wherein: the accessing or refraining from accessing, by the terminal, the network of the domain or the network of the service type according to the random number and the domain access barring parameter, or according to the random number and the service type access barring parameter, comprises:
accessing, by the terminal, the network of the domain or the network of the service type if the random number is less than the domain access barring parameter or the service type access barring parameter; and refraining, by the terminal, from accessing the network of the domain or the network of the service type if the random number is greater than or equal to the domain access barring parameter or the service type access barring parameter; or
accessing, by the terminal, the network of the domain or the network of the service type if the random number is greater than or equal to the domain access barring parameter or the service type access barring parameter; and refraining, by the terminal, from accessing the network of the domain or the network of the service type if the random number is less than the domain access barring parameter or the service type access barring parameter.

7. The method according to claim 5 or 6, wherein the obtaining, by the terminal, the domain access barring parameter or the service type access barring parameter, comprises:
receiving, by the terminal, access class barring information sent by an access network device, and obtaining domain access barring parameter or service type access barring parameter corresponding to the access class barring information according to the access class barring information; or
receiving, by the terminal, the domain access barring parameter or the service type access barring parameter sent by an access network device; or
receiving, by the terminal, a domain access barring parameter list or a service type access barring parameter list that is corresponding to an access class and sent by an access network device, wherein access class barring information of the access class indicates barring or no barring of access to the network; and obtaining the domain access barring parameter or the service type access barring parameter corresponding to the access class of the terminal according to the access class of the terminal, wherein the access class barring information is sent by the access network device and received by the terminal; or
receiving, by the terminal, a domain access barring parameter list or a service type access barring parameter list which is corresponding to the access class and sent by an access network device, and obtaining the domain access barring parameter or the service type access barring parameter corresponding to the access class of the terminal according to the access class of the terminal.

8. The method according to claim 7, wherein the receiving, by the terminal, the domain access barring parameter or the service type access barring parameter sent by the access network device, comprises:
receiving, by the terminal, a system broadcast message, a paging message, or a dedicated message sent by the access network device, wherein the system broadcast message, the paging message, or the dedicated message comprises the domain access barring parameter or the service type access barring parameter; or
receiving, by the terminal, a paging message sent by the access network device, wherein the paging message comprises a domain access barring parameter corresponding to a service originated or terminated by the terminal, or comprises a service type access barring parameter corresponding to a conversation service and/or a streaming service and/or an interactive service and/or a background service of the terminal.

9. The method according to claim 8, wherein the paging message further comprises a paging cause value, used to indicate that the paging message is caused by a change of the domain access barring parameter or a change of the service type access barring parameter.

10. The method according to claim 7, wherein the receiving, by the terminal, the domain access barring parameter list or the service type access barring parameter list that is corresponding to the access class and sent by the access network device, wherein the access class barring information of the access class indicates barring or no barring of access to the network, comprises:
receiving, by the terminal, a system broadcast message, a paging message, or a dedicated message sent by the access network device, wherein the system broadcast message, the paging message, or the dedicated message comprises a domain access barring parameter list or a service type access barring parameter list corresponding to the access class, wherein the access class barring information of the access class indicates barring or no barring of access to the network.

11. The method according to claim 7, wherein the receiving, by the terminal, the domain access barring parameter list that is corresponding to the access class and sent by the access network device, comprises:
receiving, by the terminal, a system broadcast message, a paging message, or a dedicated message sent by the access network device, wherein the system broadcast message, the paging message, or the dedicated message comprises the domain access barring parameter list or the service type access barring parameter list corresponding to the access class.

12. The method according to any one of claims 8 to 11, wherein the system broadcast message, the paging message, or the dedicated message further comprises parameter validity region information, and the parameter validity region information is used to indicate a validity region of the domain access barring parameter or the service type access barring parameter.

13. The method according to any one of claims 5 to 12, wherein the generating, by the terminal, the random number, comprises:
receiving, by the terminal, access class barring information sent by the access network device; and
generating, by the terminal, the random number if the access class barring information indicates that the terminal is barred from accessing the network; or generating the random number if the access class barring information indicates that the terminal is not barred from accessing the network.

14. An access control method, comprising:
determining, by an access network device, a need of rejecting or releasing a service originated or performed by a terminal; and
sending, by the access network device to the terminal, a message that is used to reject or release the service originated or performed by the terminal, wherein the message comprises domain wait time information or service type wait time information, so that the terminal refrains from originating the service in a time indicated by the domain wait time information or the service type wait time information, wherein the domain wait time information is used to indicate a wait time specific to a domain of the service, or the service type wait time information is used to indicate a wait time specific to a service type of the service.

15. The method according to claim 14, wherein:
the domain wait time information comprises CS domain wait time information and/or PS domain wait time information; or
the service type wait time information comprises conversation service wait time information and/or streaming service wait time information and/or interactive service wait time information and/or background service wait time information.

16. An access control method, comprising:
generating, by an access network device, a domain access barring parameter or a service type access barring parameter, wherein the domain access barring parameter comprises a CS domain access barring parameter and/or a PS domain access barring parameter, or the service type access barring parameter comprises a conversation service access barring parameter and/or a streaming service access barring parameter and/or an interactive service access barring parameter and/or a background service access barring parameter; and
sending, by the access network device, the domain access barring parameter or the service type access barring parameter to a terminal, so that the terminal generates a random number and the terminal accesses or refrains from accessing a network of the domain or a network of the service type according to the random number and the domain access barring parameter or according to the random number and the service type access barring parameter.

17. The method according to claim 16, wherein the generating, by the access network device, the domain access barring parameter or the service type access barring parameter, comprises:
generating, by the access network device, the domain access barring parameter or the service type access barring parameter; or
generating, by the access network device, a domain access barring parameter list or a service type access barring parameter list corresponding to an access class, wherein access class barring information of the access class indicates barring or no barring of access to the network, so that the terminal obtains the domain access barring parameter or the service type access barring parameter corresponding to the access class of the terminal according to the access class of the terminal, wherein the access class barring information is sent by the access network device to the terminal; or
generating, by the access network device, a domain access barring parameter list or a service type access barring parameter list corresponding to an access class, so that the terminal obtains the domain access barring parameter or the service type access barring parameter corresponding to the access class of the terminal according to the access class of the terminal.

18. The method according to claim 17, wherein the sending, by the access network device, the domain access barring parameter or the service type access barring parameter to the terminal, comprises:
sending, by the access network device, a system broadcast message, a paging message, or a dedicated message to the terminal, wherein the system broadcast message, the paging message, or the dedicated message comprises the domain access barring parameter or the service type access barring parameter; or
sending, by the access network device, a paging message to the terminal, wherein the paging message comprises a domain access barring parameter corresponding to a service originated or terminated or performed by the terminal, or comprises a service type access barring parameter corresponding to a conversation service and/or a streaming service and/or an interactive service and/or a background service of the terminal.

19. The method according to claim 18, wherein the paging message further comprises a paging cause value, used to indicate that the paging message is caused by a change of the domain access barring parameter or a change of the service type access barring parameter.

20. The method according to claim 17, wherein the sending, by the access network device, the domain access barring parameter or the service type access barring parameter to the terminal, comprises:
sending, by the access network device, a system broadcast message, a paging message, or a dedicated message to the terminal, wherein the system broadcast message, the paging message, or the dedicated message comprises a domain access barring parameter list or a service type access barring parameter list corresponding to the access class, wherein the access class barring information of the access class indicates barring or no barring of access to the network.

21. The method according to claim 17, wherein the sending, by the access network device, the domain access barring parameter or the service type access barring parameter to the terminal, comprises:
sending, by the access network device, a system broadcast message, a paging message, or a dedicated message to the terminal, wherein the system broadcast message, the paging message, or the dedicated message comprises the domain access barring parameter list or the service type access barring parameter list corresponding to the access class.

22. The method according to any one of claims 18 to 21, wherein the system broadcast message, the paging message, or the dedicated message further comprises parameter validity region information, and the parameter validity region information is used to indicate a validity region of the domain access barring parameter or the service type access barring parameter.

23. A terminal, comprising:
a receiver, configured to receive from an access network device a message that is used to reject or release a service originated or performed by the terminal, wherein the message comprises domain wait time information or service type wait time information, wherein the domain wait time information is used to indicate a wait time specific to a domain of the service, or the service type wait time information is used to indicate a wait time specific to a service type of the service; and
a processor, configured to refrain from originating the service in a time indicated by the domain wait time information or the service type wait time information.

24. The terminal according to claim 23, wherein:
the domain wait time information comprises CS domain wait time information and/or PS domain wait time information; or
the service type wait time information comprises conversation service wait time information and/or streaming service wait time information and/or interactive service wait time information and/or background service wait time information.

25. The terminal according to claim 23 or 24, wherein the processor is specifically configured to:
when the receiver receives the message for a preset number of times, refrain from originating the service in a first preset time, wherein the first preset time is greater than the time indicated by the domain wait time information or the service type wait time information; or
refrain from originating the service in a second preset time, wherein the second preset time is greater than the time indicated by the domain wait time information or the service type wait time information; or
generate a random number, and originate or refrain from originating the service according to the random number and a preset access barring parameter when the time indicated by the domain wait time information or the service type wait time information expires; or
generate a random access class, and if the random access class is the same as an access class of the terminal, originate the service when the time indicated by the domain wait time information or the service type wait time information expires; and if the random access class is different from the access class of the terminal, refrain from originating the service when the time indicated by the domain wait time information or the service type wait time information expires.

26. The terminal according to claim 25, wherein the processor is specifically configured to:
if the random number is less than the access barring parameter, originate the service when the time indicated by the domain wait time information or the service type wait time information expires; and if the random number is greater than or equal to the access barring parameter, refrain from originating the service when the time indicated by the domain wait time information or the service type wait time information expires; or
if the random number is greater than or equal to the access barring parameter, originate the service when the time indicated by the domain wait time information or the service type wait time information expires; and if the random number is less than the access barring parameter, refrain from originating the service when the time indicated by the domain wait time information or the service type wait time information expires.

27. A terminal, comprising:
a receiver, configured to obtain a domain access barring parameter or a service type access barring parameter, wherein the domain access barring parameter comprises a CS domain access barring parameter and/or a PS domain access barring parameter, or the service type access barring parameter comprises a conversation service access barring parameter and/or a streaming service access barring parameter and/or an interactive service access barring parameter and/or a background service access barring parameter;
a generation processor, configured to generate a random number; and
an access processor, configured to access or refrain from accessing a network of the domain or a network of the service type according to the random number and the domain access barring parameter, or according to the random number and the service type access barring parameter.

28. The terminal according to claim 27, wherein the access processor is specifically configured to:
access a network of the domain or a network of the service type if the random number is less than the domain access barring parameter or the service type access barring parameter; and, refrain from accessing the network of the domain or the network of the service type if the random number is greater than or equal to the domain access barring parameter or the service type access barring parameter; or
access the network of the domain if the random number is greater than or equal to the domain access barring parameter or the service type access barring parameter; and refrain from accessing the network of the domain or the network of the service type if the random number is less than the domain access barring parameter or the service type access barring parameter.

29. The terminal according to claim 27 or 28, wherein the receiver is specifically configured to:
receive access class barring information sent by an access network device, and obtain a domain access barring parameter or a service type access barring parameter corresponding to the access class barring information according to the access class barring information; or
receive the domain access barring parameter or the service type access barring parameter sent by an access network device; or
receive a domain access barring parameter list or a service type access barring parameter list that is corresponding to an access class and sent by an access network device, wherein the access class barring information of the access class indicates barring or no barring of access to the network; and obtain the domain access barring parameter or the service type access barring parameter corresponding to the access class of the terminal according to the access class of the terminal, wherein the access class barring information is sent by the access network device and received by the terminal; or
receive the domain access barring parameter list or the service type access barring parameter list that is corresponding to the access class and sent by an access network device, and obtain the domain access barring parameter or the service type access barring parameter corresponding to the access class of the terminal according to the access class of the terminal.

30. The terminal according to claim 29, wherein the receiver is specifically configured to:
receive a system broadcast message, a paging message, or a dedicated message sent by the access network device, wherein the system broadcast message, the paging message, or the dedicated message comprises the domain access barring parameter or the service type access barring parameter; or
receive a paging message sent by the access network device, wherein the paging message comprises a domain access barring parameter corresponding to a service originated or terminated or performed by the terminal, or comprises a service type access barring parameter corresponding to a conversation service and/or a streaming service and/or an interactive service and/or a background service of the terminal.

31. The terminal according to claim 30, wherein the paging message further comprises a paging cause value, used to indicate that the paging message is caused by a change of the domain access barring parameter or a change of the service type access barring parameter.

32. The terminal according to claim 29, wherein the receiver is specifically configured to:
receive a system broadcast message, a paging message, or a dedicated message sent by the access network device, wherein the system broadcast message, the paging message, or the dedicated message comprises a domain access barring parameter list or a service type access barring parameter list corresponding to the access class, wherein the access class barring information of the access class indicates barring or no barring of access to the network.

33. The terminal according to claim 29, wherein the receiver is specifically configured to:
receive a system broadcast message, a paging message, or a dedicated message sent by the access network device, wherein the system broadcast message, the paging message, or the dedicated message comprises the domain access barring parameter list or the service type access barring parameter list corresponding to the access class.

34. The terminal according to any one of claims 30 to 33, wherein the system broadcast message, the paging message, or the dedicated message further comprises parameter validity region information, and the parameter validity region information is used to indicate a validity region of the domain access barring parameter or the service type access barring parameter.

35. The terminal according to any one of claims 27 to 34, wherein the generation processor is specifically configured to:
receive access class barring information sent by the access network device; and
generate the random number if the access class barring information indicates that the terminal is barred from accessing the network; or generate the random number if the access class barring information indicates that the terminal is not barred from accessing the network.

36. An access network device, comprising:
a determination processor, configured to determine a need of rejecting or releasing a service originated or performed by a terminal; and
a sender, configured to send, to the terminal, a message that is used to reject or release the service originated or performed by the terminal, wherein the message comprises domain wait time information or service type wait time information, so that the terminal refrains from originating the service in a time indicated by the domain wait time information or the service type wait time information, wherein the domain wait time information is used to indicate a wait time specific to a domain of the service, or the service type wait time information is used to indicate a wait time specific to a service type of the service.

37. The access network device according to claim 36, wherein:
the domain wait time information comprises CS domain wait time information and/or PS domain wait time information; or
the service type wait time information comprises conversation service wait time information and/or streaming service wait time information and/or interactive service wait time information and/or background service wait time information.

38. An access network device, comprising:
a generation processor, configured to generate a domain access barring parameter or a service type access barring parameter, wherein the domain access barring parameter comprises a CS domain access barring parameter and/or a PS domain access barring parameter, or the service type access barring parameter comprises a conversation service access barring parameter and/or a streaming service access barring parameter and/or an interactive service access barring parameter and/or a background service access barring parameter;
a sender, configured to send the domain access barring parameter or the service type access barring parameter to a terminal, so that the terminal generates a random number and the terminal accesses or refrains from accessing a network of the domain or a network of the service type according to the random number and the domain access barring parameter or according to the random number and the service type access barring parameter.

39. The access network device according to claim 38, wherein the generation processor is specifically configured to:
generate the domain access barring parameter or the service type access barring parameter; or
generate a domain access barring parameter list or a service type access barring parameter list corresponding to an access class, wherein access class barring information of the access class indicates barring or no barring of access to the network, so that the terminal obtains the domain access barring parameter or the service type access barring parameter corresponding to the access class of the terminal according to the access class of the terminal, wherein the access class barring information is sent by the access network device to the terminal; or
generate the domain access barring parameter list or the service type access barring parameter list corresponding to the access class, so that the terminal obtains the domain access barring parameter or the service type access barring parameter corresponding to the access class of the terminal according to the access class of the terminal.

40. The access network device according to claim 39, wherein the sender is specifically configured to:
send a system broadcast message, a paging message, or a dedicated message to the terminal, wherein the system broadcast message, the paging message, or the dedicated message comprises the domain access barring parameter or the service type access barring parameter; or
send a paging message to the terminal, wherein the paging message comprises a domain access barring parameter corresponding to a service originated or terminated or performed by the terminal, or comprises a service type access barring parameter corresponding to a conversation service and/or a streaming service and/or an interactive service and/or a background service of the terminal.

41. The access network device according to claim 40, wherein the paging message further comprises a paging cause value, used to indicate that the paging message is caused by a change of the domain access barring parameter or a change of the service type access barring parameter.

42. The access network device according to claim 39, wherein the sender is specifically configured to:
send a system broadcast message, a paging message, or a dedicated message to the terminal, wherein the system broadcast message, the paging message, or the dedicated message comprises a domain access barring parameter list or a service type access barring parameter list corresponding to the access class, wherein the access class barring information of the access class indicates barring or no barring of access to the network.

43. The access network device according to claim 39, wherein the sender is specifically configured to:
send a system broadcast message, a paging message, or a dedicated message to the terminal, wherein the system broadcast message, the paging message, or the dedicated message comprises the domain access barring parameter list or the service type access barring parameter list corresponding to the access class.

44. The access network device according to any one of claims 40 to 43, wherein the system broadcast message, the paging message, or the dedicated message further comprises parameter validity region information, and the parameter validity region information is used to indicate a validity region of the domain access barring parameter or the service type access barring parameter.
